# EUROPEAN PATENT SPECIFICATION

(11) **EP 3 446 353 B1**
(45) Date of publication and mention of the grant of the patent: **29.04.2020**
(21) Application number: 17721465.7
(22) Date of filing: 18.04.2017
(51) Int. Cl.: H01M 10/04, H01G 13/02, H01M 10/0587

(54) **WINDING APPARATUS**
WICKELVORRICHTUNG
APPAREIL D'ENROULEMENT

(30) Priority: 19.04.2016 IT UA20162718
(43) Date of publication of application: 27.02.2019
(73) Proprietor: Manz Italy S.r.l., 40037 Sasso Marconi (BO) (IT)
(72) Inventor: SALE, Massimiliano, 40037 Sasso Marconi (Bologna) (IT)
(74) Representative: Bergadano, Mirko
(86) International application number: PCT/IB2017/052192
(87) International publication number: WO 2017/182932

(56) References cited:
- DE-A1-102011 075 063
- GB-A- 901 418
- JP-A- H0 574 446
- US-A- 1 385 379
- US-A- 2 944 753
- US-A1- 2010 281 685

## Description

### Background of the invention

The invention relates to winding apparatus, in particular for winding on a rotating nucleus a plurality of strips (electrode/s and/or separator/s) in the production of electrical energy storage devices.

Specifically, but not exclusively, the invention can be applied to the production of electrical energy storage devices of the "jelly roll" or "spiral wound" type, like, for example, cylindrical or oval, batteries or capacitors.

In the production of batteries of the "jelly roll" type, it is known to slide the strips (electrode/s and separator/s) along various feeding paths that all converge on the rotatable winding core. It is desirable to succeed in winding the strips in a continuous, ordered and regular manner to ensure the formation of a product of high quality of the desired shape that is compact and uniform. In particular, it is desirable to avoid the risk of a misalignment of the various winding coils of the strips, with consequent faults in the final wound product, for example opposite end surfaces of irregular shape, which are not perfectly flat, undulate or are untidy.

US 2010/281685 A1 discloses detecting units that adjust positions of electrodes and separators between two positions in which electrodes and separators are stacked before being wounded around a winding shaft.

JP H0574446 discloses an apparatus comprising angle variable rollers and position detecting sensors coupled with the feeders of electrodes, wherein the tilting angle of the rollers is controlled based on the sensor output in view of the winding around a spindle.

GB 901418 A discloses an apparatus as in the preamble of claim 1.

### Summary of the invention

One object of the invention is to make a winding apparatus that is able to overcome one or more of the drawbacks of the prior art mentioned above.

One advantage is to wind the strips in a continuous, orderly and regular manner, ensuring the formation of a product of high quality.

One advantage is to obtain with precision a wound product of the desired shape that is compact and uniform.

One advantage is to form a wound product with perfect alignment of the various winding coils of the strips.

One advantage is to avoid irregularities in the wound product, like, for example, opposite end surfaces of irregular shape (which are not perfectly flat).

One advantage is to make available a winding apparatus in which the strip/s to be wound on a rotatable winding core is/are always fitted with the desired orientation of the entering strip with respect to the periphery of the product being wound, taking account of the gradual accumulation of product around the core and consequent progressive variation of the diameter thereof.

One advantage is to avoid winding irregularities that are due, in particular, to the increase in the diameter of the wound product, which progressively varies the configuration of the system and could cause, for example, a strip to exit from the sliding guide or cause a strip to deviate from the predefined path, with a consequent risk of malformation of the wound product.

One advantage is to provide a winding apparatus for winding strip/s, which is constructionally simple and cheap, suitable for the production of electrical energy storage devices of high quality.

One advantage is to maintain high productivity.

Other objects and advantages and still others are achieved with the present invention by providing an winding apparatus according to claim 1. A method for the production of electrical energy storage devices by using a winding apparatus according to claim 15 is further provided.

Embodiments of the invention are set forth with the appended dependent claims.

In one embodiment, a winding apparatus comprises a rotatable winding core on which at least one strip is wound, in particular at least one electrode strip, in which the strip advances along a preset feeding path to the core by sliding on strip guide means; the apparatus comprises at least one (rotatable) movable portion that supports at least partially the strip guide means and which, during winding, performs an adjusting (rotation) movement according to the progressive variation of at least one dimension (diameter) of the product that is being formed on the winding core, so as to insert the strip into the product being wound with a desired direction.

The winding apparatus may comprise, in particular, at least one first electrode guide arranged for guiding a first electrode strip and at least one second electrode guide arranged for guiding a second electrode strip. The winding apparatus could further comprise at least one first separator guide arranged for guiding a first separator strip and at least one second separator guide arranged for guiding a second separator strip. The aforesaid guides may be, all or partially, capable of performing at least one adjusting movement upon the command of driving means controlled by at least one electric cam.

### Brief description of the drawings

The invention can be better understood and implemented with reference to the attached drawings that illustrate one embodiment thereof by way of non-limiting example.
Figure 1 is a lateral partial schematic view of one embodiment of a winding apparatus made according to the invention.
Figure 2 is a top schematic view of a detail of the winding apparatus of figure 1 that includes the adjusting system for adjusting the position of the strip/s at the inlet of the winding core.
Figure 3 shows an enlarged detail of figure 1.
Figure 4 is a front view of a detail of the winding apparatus of figure 1 that includes the strip guiding means.
Figure 5 is a perspective view of one embodiment of a wound product ("jelly roll" battery) that is obtainable by the winding apparatus of figure 1.

### Detailed description

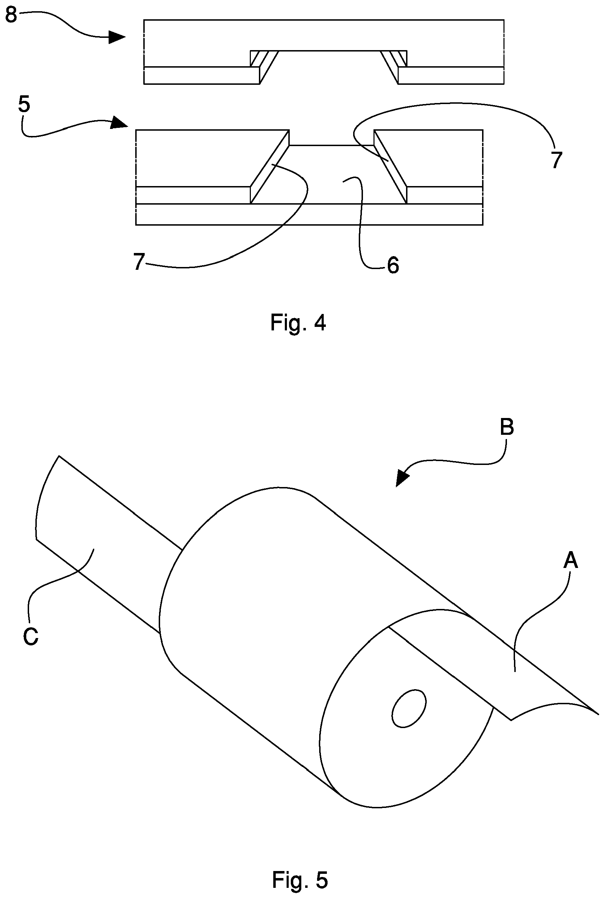

With 1 overall a winding apparatus has been indicated to wind one or more strips on themselves to form a wound product. The winding apparatus 1 may be used in particular for the production of electrical energy storage devices, in particular of the "jelly roll" type, for example cylindrical or oval rechargeable batteries. In figure 5, one embodiment of wound finished product B is shown that is obtainable with the winding apparatus 1. The wound product B comprises, in this specific embodiment, a cylindrical rechargeable battery of the "jelly roll" type, formed by the winding of two electrode strips alternating with two separator strips. The first electrode strip may take to one end a first tab C (cathode) and the second electrode strip may take a second tab A (anode) to one end.

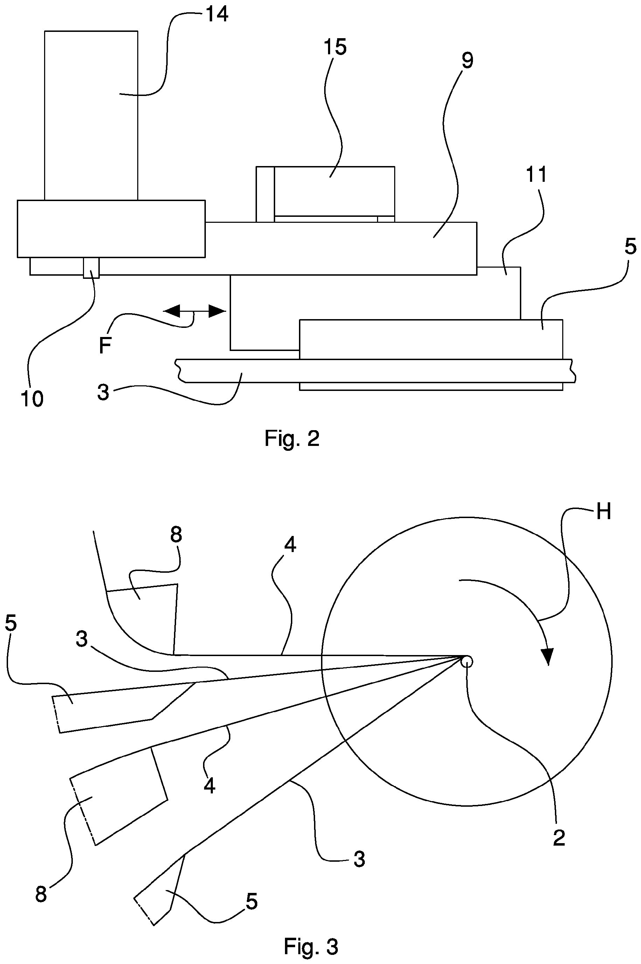

The winding apparatus 1 may comprise, in particular, at least one winding core 2 on which the product is wound. The core 2 (spindle) may be able to rotate (rotation H in figure 3). The core 2 may rotate, in particular, around a fixed rotation axis. The core 2 may be rotated by controlled motor means by programmable electronic control means. The core 2 may be, for example, of cylindrical shape. The final wound product may be, as in the embodiment in figure 5, of cylindrical shape, although in other embodiments it could have different shapes. The core 2 may be arranged for dragging the strips to be wound. The strips may comprise, in particular, two electrode strips 3 and two separator strips 4.

The winding apparatus 1 may comprise, in particular, at least one first electrode guide 5 arranged for guiding the feeding of a first electrode strip 3 to the core 2. The winding apparatus 1 may comprise, in particular, at least one second electrode guide 5 arranged for guiding the feeding of a second electrode strip 3 to the core 2. Figure 4 shows in detail one embodiment of a (first and/or second) electrode guide 5, which may comprise, in particular, a (flat) sliding surface 6 of the strip 3 which may be bounded laterally by two walls 7 that emerge from the surface 6 for guiding and containing laterally the strip 3.

The winding apparatus 1 may comprise, in particular, at least one first separator guide 8 arranged for guiding the feeding of a first separator strip 4 to the core 2. The winding apparatus 1 may comprise, in particular, at least one second separator guide 8 arranged for guiding the feeding of a second separator strip 4 to the core 2. Each separator guide 8 may comprise, for example, one strip guide substantially similar to the electrode guide 5. Each separator guide 8 may comprise, for example, a guide like the one illustrated in figure 4.

Each electrode guide 5 (first and/or second) and/or each separator guide 8 (first and/or second) is capable of performing, during winding of the strips 3 and 4 around the core 2, at least one (rotation and/or translation) movement with respect to the core 2 so as to adjust the position of the respective (first and/or second) electrode strip 5 and/or of the respective (first and/or second) separator strip 8. This adjustment may be used, in particular, to vary the position of at least one part of the means for guiding the strip/s, and consequently the entry direction of the strip/s itself/themselves, depending on the gradual variation (increase) of the diameter of the product during winding.

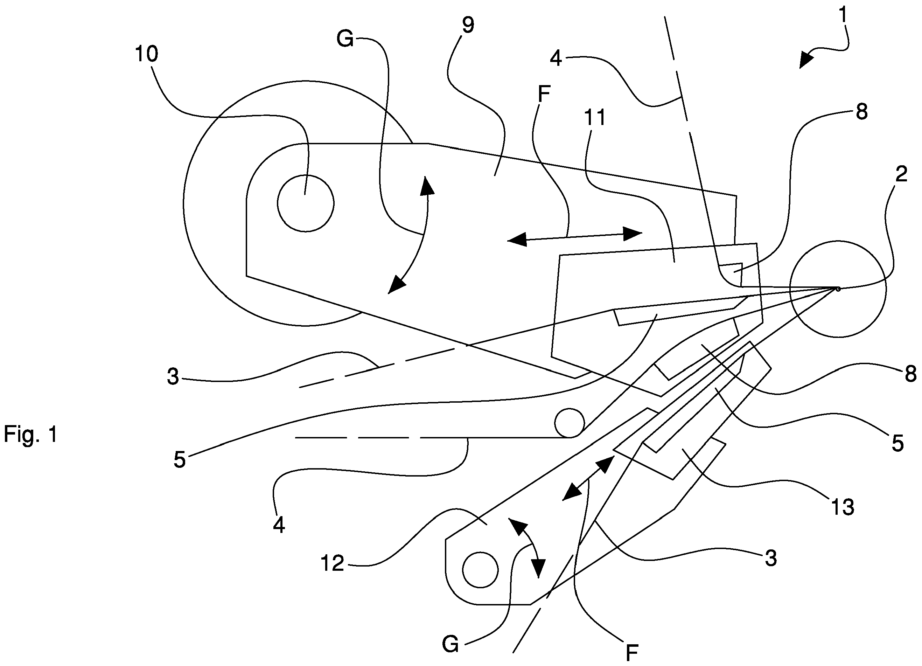

The winding apparatus 1 may comprise, in particular, a first rotatable portion 9 that is capable of performing at least one rotation (rotation G, in figure 1, around a rotation pin 10) to adjust the position of at least one strip 3 or 4. The rotation axis of the first rotatable portion 9 may be, as in this embodiment, transverse (perpendicular) to the feeding path of at least one strip 3 or 4. The rotation axis of the first rotatable portion 9 may be, as in this embodiment, parallel to the rotation axis of the winding core 2 (spindle).

The feeding paths of the electrode strips 3 and/or of the separator strips 4 may be, as in this embodiment, coplanar to one another. The feeding paths of the electrode strips 3 and/or the separator strips 4 may be, as in this embodiment, arranged on a plane that is perpendicular to the rotation axis of the core 2.

The first electrode guide 5 and/or the first separator guide 8 may be supported by the first rotatable portion 9 such that the first electrode guide 5 and/or the first separator guide 8 approaches or moves away from the core 2 through the effect of controlled rotations, in one direction or the other, of the first rotatable portion 9.

The second separator guide 8 may be, as in this embodiment, supported by the first rotatable portion 9.

The winding apparatus 1 may comprise, in particular, a first slidable portion 11 that is capable of performing at least one slide (for example linear, in a direction F) to adjust the position of at least one strip 3 or 4. The movement of the first slidable portion 11 may comprise, in particular, a translation on a plane (for example a rectilinear translation).

The first electrode guide 5 and/or the first separator guide 8 may be, in particular, supported by the first slidable portion 11 such that the first electrode guide 5 and/or the first separator guide 8 approaches or moves away from the core 2 through the effect of the first slidable portion 11 sliding in one direction or the other.

During winding, the guides 5 and 8 may be moved (rotated and/or translated and/or roto-translated) with respect to the rotation axis of the core 2, for example towards or away therefrom, in particular to maintain a desired (variable or constant) distance between the guides 5 and 8 and the periphery of the product being wound.

The first slidable portion 11 may be, as in this embodiment, supported by the first rotatable portion 9.

The second electrode guide 5 may be supported by a second rotatable portion 12 that is capable of performing at least one rotation G such that the second electrode guide 5 can approach or move away from the core 2.

The winding apparatus 1 may comprise, in particular, a second slidable portion 13 that is capable of performing at least one slide (linear, in a direction F).

The second electrode guide 5 may be, as in this embodiment, supported by the second slidable portion 13 such that the second electrode guide 5 can approach or move away from the core 2.

The second slidable portion 13 may be, in particular, supported by the second rotatable portion 12.

The first slidable portion 11 may support, as in this embodiment, the first electrode guide 5 (for example the guide of the first electrode strip) and the two separator 8 guides, whereas the second slidable portion 13 may support the second electrode guide 5 (for example the guide of the second electrode strip).

During winding, in which the diameter of the wound product increases progressively, the guides 5 and 8 can be moved (rotated and/or translated and/or roto-translated) with respect to the axis of the core 2, for example to vary the position of the guides 5 and 8 depending on the variation of the dimensions of the product being wound. This adjustment of the position of the strip guide means helps, in particular, to maintain the various winding coils of the product aligned and/or to maintain each strip guided slidably inside the respective guide means.

The first rotatable portion 9 and the second rotatable portion 12 may be driven, as in this embodiment, by two distinct first motor means 14 (for example two electric motor means) fixed to a frame of the winding apparatus 1.

The first slidable portion 11 and the second slidable portion 13 may be driven, as in this embodiment, by two distinct second motor means 15 (for example two electric motor means). One of the second motor means 15 may be supported, in particular, by the first rotatable portion 9 and may be connected to the respective first slidable portions 11 (slide) by motion transmitting means (for example means for transforming a rotation of a rotor of the second motor means 15 into a linear movement of the first slidable portion 11). The other of the second motor means 15 may be supported, in particular, by the second rotatable portion 12 and may be connected to the respective second slidable portion 13 (slide) by motion transmitting means (for example means for transforming a rotation of a rotor of the second motor means 15 into a linear movement of the second slidable portion 13).

The first slidable portion 11 may comprise, as in this embodiment, a first slide. The second slidable portion 13 may comprise, as in this embodiment, a second slide. The first rotatable portion 9 may comprise, as in this embodiment, a first rotating arm. The second rotatable portion 12 may comprise, as in this embodiment, a second rotating arm. The first rotating arm may support, in particular, the first slide. The first slide may be coupled with the first rotating arm by first sliding guides. The second rotating arm may support, in particular, the second slide. The second slide may be coupled with the second rotating arm by second sliding guides.

As has been seen, each electrode guide 5 and/or each separator guide 8 may be capable of performing at least two (position adjusting) movements with respect to the core 2. The two movements may be, in particular, transverse to one another. The two movements may comprise, in particular, at least one rotation (rotation G) and at least one translation (direction F).

The two movements, which are suitable for adjusting the introduction position of at least one strip according to the increase in diameter of the wound product, may be, as in this embodiment, driven by two distinct motor means (14 and 15).

The winding apparatus 1 may comprise, in particular, programmable electronic control means provided with computer programme instructions for controlling the adjusting movement/s on the basis of a thickness of the first and/or of the second electrode strip 3 and/or of the first and/or of the second separator strip 4. These thicknesses will determine the diameter of the product at each winding.

The thicknesses of the various strips 3 and 4 may be entered in the electronic memory and then the control means may determine, on the basis of these thicknesses, the appropriate movements of the various moveable portions 9, 11, 12, 13 (driven by the various motor means 14 and 15) to adjust the position of introduction of the strips 3 and 4 in the rotating winding core 2, in particular so that the introduction direction of the strips 3 and 4 is adjusted according to the variation of the dimensions of the product being wound (dimensions that increase gradually at each winding).

Adjusting the strip entry position enables the desired strip tension to be maintained and the strips being guided to be secured. This prevents undesired misalignments of the strips with respect to the rotating core 2 (with fixed rotation axis).

The correct strip entry position, which is suitable for maintaining the desired tension of the strips and for ensuring the guided feeding of the strips, may be determined, for example, empirically.

The various strips (electrode strips 3 and separator strips 4) may be unwound from respective reels (not shown). Each feeding path feeding the strips 3 and 4 may comprise, in particular, different elements (of known type) that are coupled with the strips, such as for example (idle) rotatable guide rollers, fixed sliding guides, guide pulleys, etc. Each electrode strip 3 and separator strip 4 may advance along the feed path being dragged by the effect of the rotation of the core 2 (spindle).

In the embodiment disclosed above, the adjusting movement for adjusting the strip entry position comprises at least one rotation (rotation G) and/or at least one translation (direction F) of the strip guiding means. It is nevertheless possible to provide an adjusting movement that may comprise, for example, a more complex movement in a plane or in space, in which the guiding means is moved with respect to the (fixed) rotation axis of the core, gradually during winding, as the wound product is formed.

In the embodiment disclosed above, four strips are wound (two electrode strips 3 and two separator strips 4). It is nevertheless possible to wind a different (greater or lesser) number of strips. It is possible, for example, to form a product by winding two strips, each of which comprises an electrode strip configured so as to act also as a separator function.

## Claims

1. Winding apparatus (1) comprising:
- at least one rotatable winding core (2);
- at least one first electrode guide (5) arranged to guide the feeding of a first electrode strip (3) to said core (2);
- moving means for moving said at least one first electrode guide (5), during a winding of the first electrode strip (3) around said core (2), with at least one movement relative to said core (2) so as to vary the position of the first electrode strip (3) while varying at least one dimension of the product wrapped on said core (2);
**characterized in that** said movement varies the direction of introduction of the first electrode strip (3) during the winding.

2. Apparatus according to claim 1, comprising at least one second electrode guide (5) arranged to guide the feeding of a second electrode strip (3) to said core (2).

3. Apparatus according to claim 2, wherein said moving means is arranged to move said at least one second electrode guide (5), during a winding of the second electrode strip (3) around said core (2), with at least one movement with respect to said core (2) so as to vary the position of the second electrode strip (3) depending on the variation of at least one dimension of the product wrapped on said core (2).

4. Apparatus according to any one of the preceding claims, comprising:
- at least one first separator guide (8) arranged to guide the feeding of a first separator strip (4) to said core (2), said moving means being arranged to move said at least one first separator guide (8), during a winding of the first separator strip (4) around said core (2), with at least one movement relative to said core (2) so as to vary the position of the first separator strip (4) during the variation of a dimension of the wrapped product**; and/or**
- at least one second separator guide (8) arranged to guide the feeding of a second separator strip (4) to said core (2), said moving means being arranged to move said at least one second separator guide (8), during a winding of the second separator strip (4) around said core (2), with at least one movement relative to said core (2) so as to vary the position of the second separator strip (4) during the variation of a dimension of the wrapped product.

5. **Apparatus** according to any one of the preceding claims, **wherein** said moving means comprises at least one first rotatable portion (9) which supports said at least one first electrode guide (5) and which is capable of performing at least one rotation (G) so that said at least one first electrode guide (5) moves with respect to said core (2).

6. Apparatus according to claim **5,** wherein said first rotatable portion (9) supports at least one first separator guide (8) arranged to guide the feeding of a first separator strip (4) to said core (2), **and/or** wherein said first rotatable portion (9) supports at least one second separator guide (8) arranged to guide the feeding of a second separator strip (4) to said core (2).

7. **Apparatus** according to any one of the preceding claims, wherein said moving means comprises at least one first slidable portion (11) which supports said at least one first electrode guide (5) and which is capable of performing at least one sliding (F) so as to adjust the position of said at least one first electrode guide (5) with respect to said core (2); **wherein** said first slidable portion (11) supports at least one first separator guide (8) arranged to guide the feeding of a first separator strip (4) to said core (2), **and** wherein said first slidable portion (11) **optionally** supports at least one second separator guide (8) arranged to guide the feeding of a second separator strip (4) to said core (2).

8. Apparatus according to claim **7** and according to **claim 5 or 6,** wherein said first slidable portion (11) is supported by said first rotatable portion (9), **or** wherein said first slidable portion (11) supports said first rotatable portion (9).

9. Apparatus according to any one of the preceding claims, wherein said moving means comprises at least one second rotatable portion (12) that supports at least one second electrode guide (5) and that is capable of performing at least one rotation (G) so that said at least one second electrode guide (5) moves with respect to said core (2).

10. Apparatus according to claim **9,** wherein said moving means comprises at least one second slidable portion (13) which supports said at least one second electrode guide (5) and which is capable of performing at least one sliding (F) so that said at least one second electrode guide (5) moves with respect to said core (2).

11. Apparatus according to any one of the preceding claims, wherein said moving means comprises:
- at least one first movable portion (9; 11) that supports said at least one first electrode guide (5) and that is capable of performing at least one movement for adjusting the position of said at least one first electrode guide (5) with respect to said core (2);
- at least one second movable portion (12; 13) that supports at least one second electrode guide (5) and that is capable of performing at least one movement for adjusting the position of said at least one second electrode guide (5) with respect to said core (2);
- two distinct motor means arranged for independently operating said first movable portion (9; 11) and said second movable portion (12; 13).

12. **Apparatus** according to any one of the preceding claims, **wherein** said moving means is configured to move said at least one first electrode guide (5) with at least two movements with respect to said core (2), said two movements being transverse relative to one another.

13. Apparatus according to claim **12,** wherein said at least two movements comprise a rotation (G) and a sliding (F), **and/or** wherein said moving means comprises at least two distinct motor means (14; 15) configured to independently drive said at least two movements and to adjust the position of the first electrode strip (3) during formation of the wrapped product.

14. **Apparatus** according to any one of the preceding claims, comprising programmable electronic control means provided with computer program instructions configured to control said at least one movement on the basis of at least one value of the thickness of the first electrode strip (3).

15. Method for the production of electrical energy storage devices by using a winding apparatus (1) made according to any one of the preceding claims.

## Patentansprüche

1. Wicklungsvorrichtung (1) mit:
- mindestens einem drehbaren Wicklungskern (2);
- mindestens einer ersten Elektrodenführung (5), die zum Führen der Zuführung eines ersten Elektrodenstreifens (3) zu dem Kern (2) angeordnet ist;
- Bewegungsvorrichtungen zum Bewegen der mindestens einen ersten Elektrodenführung (5) während einer Wicklung des ersten Elektrodenstreifens (3) um den Kern (2) herum, mit mindestens einer Bewegung relativ zu dem Kern (2), um die Position des ersten Elektrodenstreifens (3) beim Variieren mindestens einer Dimension des auf dem Kern (2) gewickelten Produkts zu variieren;
**dadurch gekennzeichnet, dass** die Bewegung die Einführungsrichtung des ersten Elektrodenstreifens (3) während der Wicklung variiert.

2. Vorrichtung nach Anspruch 1, mit mindestens einer zweiten Elektrodenführung (5), die zum Führen der Zuführung eines zweiten Elektrodenstreifens (3) zu dem Kern (2) angeordnet ist.

3. Vorrichtung nach Anspruch 2, wobei die Bewegungsvorrichtung zum Bewegen der mindestens einen zweiten Elektrodenführung (5) angeordnet ist, während einer Wicklung des zweiten Elektrodenstreifens (3) um den Kern (2) herum, mit mindestens einer Bewegung relativ zu dem Kern (2), um die Position des zweiten Elektrodenstreifens (3) in Abhängigkeit von der Variation mindestens einer Dimension des auf dem Kern (2) gewickelten Produkts zu variieren.

4. Vorrichtung nach einem der vorstehenden Ansprüche, mit:
- mindestens einer ersten Separatorführung (8), die zum Führen der Zuführung eines ersten Separatorstreifens (4) zu dem Kern (2) angeordnet ist, wobei die Bewegungsvorrichtung zum Bewegen der mindestens einen ersten Separatorführung (8) angeordnet ist, während einer Wicklung des ersten Separatorstreifens (4) um den Kern (2) herum, mit mindestens einer Bewegung relativ zu dem Kern (2), um die Position des ersten Separatorstreifens (4) bei der Variation einer Dimension des wickelten Produkts zu variieren; und/oder
- mindestens einer zweiten Separatorführung (8), die zum Führen der Zuführung eines zweiten Separatorstreifens (4) zu dem Kern (2) angeordnet ist, wobei die Bewegungsvorrichtung zum Bewegen der mindestens einen zweiten Separatorführung (8) angeordnet ist, während einer Wicklung des zweiten Separatorstreifens (4) um den Kern (2) herum, mit mindestens einer Bewegung relativ zu dem Kern (2), um die Position des zweiten Separatorstreifens (4) bei der Variation einer Dimension des gewickelten Produkts zu variieren.

5. Vorrichtung nach einem der vorstehenden Ansprüche, wobei die Bewegungsvorrichtung mindestens einen drehbaren Abschnitt (9) aufweist, der die mindestens eine erste Elektrodenführung (5) trägt und der in der Lage ist, mindestens eine Drehung (G) durchzuführen, so dass sich die mindestens eine erste Elektrodenführung (5) relativ zu dem Kern (2) bewegt.

6. Vorrichtung nach Anspruch 5, wobei der erste drehbare Abschnitt (9) mindestens eine erste Separatorführung (8) trägt, die zum Führen der Zuführung eines ersten Separatorstreifens (4) zu dem Kern (2) angeordnet ist, und/oder wobei der erste drehbare Abschnitt (9) mindestens eine zweite Separatorführung (8) trägt, die zum Führen der Zuführung eines zweiten Separatorstreifens (4) zu dem Kern (2) angeordnet ist.

7. Vorrichtung nach einem der vorstehenden Ansprüche, wobei die Bewegungsvorrichtung mindestens einen verschiebbaren Abschnitt (11) aufweist, der die mindestens eine erste Elektrodenführung (5) trägt und der in der Lage ist, mindestens eine Verschiebung (F) durchzuführen, um die Position der mindestens einen ersten Elektrodenführung (5) relativ zu dem Kern (2) einzustellen; wobei der erste verschiebbare Abschnitt (11) mindestens eine erste Separatorführung (8) trägt, die zum Führen der Zuführung eines ersten Separatorstreifens (4) zu dem Kern (2) ausgebildet ist, und wobei der erste verschiebbare Abschnitt (11) optional mindestens eine zweite Separatorführung (8) trägt, die zum Führen der Zuführung eines zweiten Separatorstreifens (4) zu dem Kern (2) angeordnet ist.

8. Vorrichtung nach Anspruch 7 und nach Anspruch 5 oder 6, wobei der erste verschiebbare Abschnitt (11) von dem ersten drehbaren Abschnitt (9) getragen wird, oder wobei der erste verschiebbare Abschnitt (11) den ersten drehbaren Abschnitt (9) trägt.

9. Vorrichtung nach einem der vorstehenden Ansprüche, wobei die Bewegungsvorrichtung mindestens einen zweiten drehbaren Abschnitt (12) aufweist, der mindestens eine zweite Elektrodenführung (5) trägt und der in der Lage ist, mindestens eine Drehung (G) durchzuführen, so dass sich die mindestens eine zweite Elektrodenführung (5) relativ zu dem Kern (2) bewegt.

10. Vorrichtung nach Anspruch 9, wobei die Bewegungsvorrichtung mindestens einen zweiten verschiebbaren Abschnitt (13) aufweist, der mindestens eine zweite Elektrodenführung (5) führt und der in der Lage ist, mindestens eine Verschiebung (F) durchzuführen, so dass sich die mindestens eine zweite Elektrodenführung (5) relativ zu dem Kern (2) bewegt.

11. Vorrichtung nach einem der vorstehenden Ansprüche, wobei die Bewegungsvorrichtung aufweist:
- mindestens einen ersten bewegbaren Abschnitt (9; 11), der die mindestens eine erste Elektrodenführung (5) trägt und der in der Lage ist, mindestens eine Bewegung zum Einstellen der Position der mindestens einen ersten Elektrodenführung (5) relativ zu dem Kern (2) durchführen;
- mindestens einen zweiten bewegbaren Abschnitt (12; 13), der mindestens eine zweite Elektrodenführung (5) trägt und der in der Lage ist, mindestens eine Bewegung zum Einstellen der Position der mindestens einen zweiten Elektrodenführung (5) relativ zu dem Kern (2) durchführen;
- zwei verschiedene Motorvorrichtungen zum unabhängigen Betätigen des ersten bewegbaren Abschnitts (9; 11) und des zweiten bewegbaren Abschnitts (12; 13).

12. Vorrichtung nach einem der vorstehenden Ansprüche, wobei die Bewegungsvorrichtung dazu ausgebildet ist, die mindestens eine erste Elektrodenführung (5) mit mindestens zwei Bewegungen relativ zu dem Kern (2) zu bewegen, wobei die zwei Bewegungen relativ zueinander quer verlaufen.

13. Vorrichtung nach Anspruch 12, wobei die mindestens zwei Bewegungen eine Drehung (G) und eine Verschiebung (F) aufweisen, und/oder wobei die Bewegungsvorrichtung mindestens zwei verschiedene Motorvorrichtungen (14; 15) aufweist, die dazu ausgebildet sind, die mindestens zwei Bewegungen unabhängig anzutreiben und die Position des ersten Elektrodenstreifens (3) während der Bildung des gewickelten Produkts einzustellen.

14. Vorrichtung nach einem der vorstehenden Ansprüche, mit einer programmierbaren elektronischen Steuervorrichtung mit Computerprogrammbefehlen, die zum Steuern der mindestens einen Bewegung basierend auf mindestens einem Wert der Dicke des ersten Elektrodenstreifens (3) ausgebildet sind.

15. Verfahren zur Herstellung von Speichervorrichtungen für elektrische Energie mittels einer Wicklungsvorrichtung (1), die nach einem der vorstehenden Ansprüche hergestellt ist.

## Revendications

1. Appareil d'enroulement (1) comprenant :
- au moins un mandrin d'enroulement rotatif (2) ;
- au moins un premier guide d'électrode (5) agencé pour guider l'avance d'une première bande d'électrode (3) jusqu'audit mandrin (2) ;
- un moyen de déplacement pour déplacer ledit au moins un premier guide d'électrode (5), pendant un enroulement de la première bande d'électrode (3) autour dudit mandrin (2), avec au moins un déplacement par rapport audit mandrin (2) de manière à faire varier la position de la première bande d'électrode (3) tout en faisant varier au moins une dimension du produit enroulé sur ledit mandrin (2) ;
**caractérisé en ce que** ledit déplacement fait varier la direction d'introduction de la première bande d'électrode (3) pendant l'enroulement.

2. Appareil selon la revendication 1, comprenant au moins un deuxième guide d'électrode (5) agencé pour guider l'avance d'une deuxième bande d'électrode (3) jusqu'audit mandrin (2).

3. Appareil selon la revendication 2, dans lequel ledit moyen de déplacement est agencé pour déplacer ledit au moins un deuxième guide d'électrode (5), pendant un enroulement de la deuxième bande d'électrode (3) autour dudit mandrin (2), avec au moins un déplacement par rapport audit mandrin (2) de manière à faire varier la position de la deuxième bande d'électrode (3) en fonction de la variation d'au moins une dimension du produit enroulé sur ledit mandrin (2).

4. Appareil selon l'une quelconque des revendications précédentes, comprenant :
- au moins un premier guide de séparateur (8) agencé pour guider l'avance d'une première bande de séparateur (4) jusqu'audit mandrin (2), ledit moyen de déplacement étant agencé pour déplacer ledit au moins un premier guide de séparateur (8), pendant un enroulement de la première bande de séparateur (4) autour dudit mandrin (2), avec au moins un déplacement par rapport audit mandrin (2) de manière à faire varier la position de la première bande de séparateur (4) pendant la variation d'une dimension du produit enroulé ; et/ou
- au moins un deuxième guide de séparateur (8) agencé pour guider l'avance d'une deuxième bande de séparateur (4) jusqu'audit mandrin (2), ledit moyen de déplacement étant agencé pour déplacer ledit au moins un deuxième guide de séparateur (8), pendant un enroulement de la deuxième bande de séparateur (4) autour dudit mandrin (2), avec au moins un déplacement par rapport audit mandrin (2) de manière à faire varier la position de la deuxième bande de séparateur (4) pendant la variation d'une dimension du produit enroulé.

5. Appareil selon l'une quelconque des revendications précédentes, dans lequel ledit moyen de déplacement comprend au moins une première partie rotative (9) qui supporte ledit au moins un premier guide d'électrode (5) et qui est apte à effectuer au moins une rotation (G) de telle sorte que ledit au moins un premier guide d'électrode (5) se déplace par rapport audit mandrin (2) .

6. Appareil selon la revendication 5, dans lequel ladite première partie rotative (9) supporte au moins un premier guide de séparateur (8) agencé pour guider l'avance d'une première bande de séparateur (4) jusqu'audit mandrin (2), et/ou dans lequel ladite première partie rotative (9) supporte au moins un deuxième guide de séparateur (8) agencé pour guider l'avance d'une deuxième bande de séparateur (4) jusqu'audit mandrin (2).

7. Appareil selon l'une quelconque des revendications précédentes, dans lequel ledit moyen de déplacement comprend au moins une première partie glissante (11) qui supporte ledit au moins un premier guide d'électrode (5) et qui est apte à effectuer au moins un glissement (F) de manière à ajuster la position dudit au moins un premier guide d'électrode (5) par rapport audit mandrin (2) ; dans lequel ladite première partie glissante (11) supporte au moins un premier guide de séparateur (8) agencé pour guider l'avance d'une première bande de séparateur (4) jusqu'audit mandrin (2), et dans lequel ladite première partie glissante (11) supporte éventuellement au moins un deuxième guide de séparateur (8) agencé pour guider l'avance d'une deuxième bande de séparateur (4) jusqu'audit mandrin (2).

8. Appareil selon la revendication 7 et selon la revendication 5 ou 6, dans lequel ladite première partie glissante (11) est supportée par ladite première partie rotative (9), ou dans lequel ladite première partie glissante (11) supporte ladite première partie rotative (9).

9. Appareil selon l'une quelconque des revendications précédentes, dans lequel ledit moyen de déplacement comprend au moins une deuxième partie rotative (12) qui supporte au moins un deuxième guide d'électrode (5) et qui est apte à effectuer au moins une rotation (G) de telle sorte que ledit au moins un deuxième guide d'électrode (5) se déplace par rapport audit mandrin (2) .

10. Appareil selon la revendication 9, dans lequel ledit moyen de déplacement comprend au moins une deuxième partie glissante (13) qui supporte ledit au moins un deuxième guide d'électrode (5) et qui est apte à effectuer au moins un glissement (F) de telle sorte que ledit au moins un deuxième guide d'électrode (5) se déplace par rapport audit mandrin (2).

11. Appareil selon l'une quelconque des revendications précédentes, dans lequel ledit moyen de déplacement comprend :
- au moins une première partie mobile (9 ; 11) qui supporte ledit au moins un premier guide d'électrode (5) et qui est apte à effectuer au moins un déplacement pour ajuster la position dudit au moins un premier guide d'électrode (5) par rapport audit mandrin (2) ;
- au moins une deuxième partie mobile (12 ; 13) qui supporte au moins un deuxième guide d'électrode (5) et qui est apte à effectuer au moins un déplacement pour régler la position dudit au moins un deuxième guide d'électrode (5) par rapport audit mandrin (2) ;
- deux moyens motorisés distincts agencés pour faire fonctionner indépendamment ladite première partie mobile (9 ; 11) et ladite deuxième partie mobile (12 ; 13).

12. Appareil selon l'une quelconque des revendications précédentes, dans lequel ledit moyen de déplacement est configuré pour déplacer ledit au moins un premier guide d'électrode (5) avec au moins deux déplacements par rapport audit mandrin (2), lesdits deux déplacements étant transversaux l'un par rapport à l'autre.

13. Appareil selon la revendication 12, dans lequel lesdits au moins deux déplacements comprennent une rotation (G) et un glissement (F), et/ou dans lequel ledit moyen de déplacement comprend au moins deux moyens motorisés distincts (14 ; 15) configurés pour conduire indépendamment lesdits au moins deux déplacements et pour ajuster la position de la première bande d'électrode (3) pendant la formation du produit enroulé.

14. Appareil selon l'une quelconque des revendications précédentes, comprenant des moyens de commande électroniques programmables pourvus d'instructions de programme informatique configurées pour commander ledit au moins un déplacement sur la base d'au moins une valeur de l'épaisseur de la première bande d'électrode (3) .

15. Procédé de production de dispositifs de stockage d'énergie électrique au moyen d'un appareil d'enroulement (1) fabriqué selon l'une quelconque des revendications précédentes.
